# EUROPEAN PATENT APPLICATION

(11) **EP 3 279 146 A1**
(43) Date of publication of application: **07.02.2018**
(21) Application number: 15887560.9
(22) Date of filing: 31.03.2015
(51) Int. Cl.: C01G 37/00, C01G 25/00, C01G 51/00, H01M 4/485, H01M 4/525, H01M 10/052, H01M 10/0525, H01M 10/0562, H01M 10/0566

(54) **LITHIUM-CONTAINING TRANSITION METAL OXIDE AND LITHIUM ION SECONDARY CELL USING SAME**

(71) Applicant: Hitachi, Ltd., Tokyo 100-8280 (JP)
(72) Inventor: ASARI, Yusuke, Tokyo 100-8280 (JP)
(74) Representative: MERH-IP Matias Erny Reichl Hoffmann Patentanwälte PartG mbB
(86) International application number: PCT/JP2015/060108
(87) International publication number: WO 2016/157407

(57) **Abstract**

The present invention provides, as a lithium-containing transition metal oxide, a substance which is given by the chemical compositional formula Li₄M₅O₁₂ (M = Cr, Co, or Zr) and has a spinel-type crystal structure. Provided is a lithium ion secondary cell having a positive electrode configured from a lithium-containing transition metal oxide which has a spinel-type crystal structure and has the chemical compositional formula Li₄M₅O₁₂ (M = Cr or Co). The present invention further provides a lithium ion secondary cell having a negative electrode configured from a lithium-containing transition metal oxide which has a spinel-type crystal structure and has the chemical compositional formula Li₄M₅O₁₂ (M = Zr) .

## Description

### Technical Field

The present invention relates to a lithium-containing transition metal oxide and a lithium ion secondary cell using the same.

### Background Art

Heretofore, as an electrode active material for a lithium ion secondary cell, Li₄Ti₅O₁₂ and Li₄Mn₅O₁₂ have been known as materials with scarce volumic change accompanied by charge/discharge (for example, refer to Non-patent Literature 1 and Non-patent Literature 2).

### Citation List

### Non-Patent Document

Non-patent Literature 1: Ohzuku, A. Ueda N, Yamamoto, J. Electrochem. Soc. 142, 1431 (1995).
Non-patent Literature 2: M.M. Thackeray, A. de Kock, M.H. Rossouw, D. Liles, R. Bittihn and D. Hoge, J. Electrochem. Soc. 139, 363 (1992).

### Summary of the Invention

### Technical Problem

It is known that the lithium ion secondary cell gradually decreases electrical capacity capable of charging and discharging along with repetitive charge/discharge. It is considered that one of the causes thereof is attributable to volumic expansion and shrinkage of an electrode active material.

Generally, the electrode active material has a larger volume in a state of intercalating lithium and a smaller volume in a state of deintercalating lithium. There is a problem that various deteriorations occur due to such volumic expansion/shrinkage by repetitive charge/discharge. For example, bonding between an electrode active material and a conduction aid is separated to interrupt an electron conduction path and partially inactivate the active material. Further, macro defects such as cracks are caused to the electrode active material by strain generated when the lithium concentration in the electrode active material is not uniform, which causes interruption of an ion conduction path and, accordingly, the electrode active material is inactivated.

Li₄Ti₅O₁₂ and Li₄M₅O₁₂ are known respectively as materials with less volumic strain accompanying charge/discharge, and it is considered that separation from the conduction aid and generation of cracks in the electrode active material can be prevented by using such electrode active materials to make the life of the lithium ion secondary cell longer in principle.

However, the potential of Li₄Ti₅O₁₂ is 1.5 V and there is a problem that the potential is high when Li₄Ti₅O₁₂ is used as a negative electrode material. In a case where the voltage of the negative electrode is high, the energy density of the lithium ion secondary cell is decreased, and competitive performance of the cell is lowered. At present, active materials having a potential lower than 1.5 V and with less product expansion/shrinkage have not been found.

Further, since the potential of Li₄Mn₅O₁₂ is 3 V, it involves a problem that the potential is low when Li₄Mn₅O₁₂ is used as the material for the positive electrode. When the voltage of the positive electrode is low, the energy density of the lithium ion secondary cell is decreased and the competitive power of the cell is lowered. At present, active materials having a potential higher than 3 V and with less volumic expansion/shrinkage have not been found.

In view of the above, the present inventors studied on (1) an electrode active material having a potential lower than 1.5 V and with less volumic expansion, (2) an electrode active material having a potential higher than 3.0 V and with a small volumic expansion, and (3) a lithium ion secondary cell using one or both of the electrode active materials described above.

### Solution to Problem

As one of inventions solving the problems described above, the present inventors propose a lithium-containing transition metal oxide having a spinel-type crystal structure and having the chemical compositional formula Li₄M₅O₁₂ (M = Cr, Co, or Zr). Further, the present inventors propose, as one of inventions capable of solving the problems, a lithium ion secondary cell having a positive electrode comprising a lithium-containing transition metal oxide having a spinel-type crystal structure and having the chemical composition Li₄M₅O₁₂ (M = Cr or Co). Further, the present inventors propose, as one of inventions solving the problems described above, a lithium ion secondary cell having a negative electrode comprising a lithium-containing transition metal oxide having a spinel-type crystal structure and having the chemical compositional formula Li₄M₅O₁₂ (M = Zr) .

### Advantageous Effects of Invention

The lithium-containing transition metal oxide described above can provide a lithium ion secondary cell having a longer life and higher energy density compared with existent cells because the volumic change accompanying charge/discharge is suppressed. Other problems, constitutions and advantageous effects than those described above will become apparent by the following description of preferred embodiments. Brief Description of Drawings

Fig. 1 is a view illustrating a crystal structure of Li₇M₅O₁₂.
Fig. 2 is a view illustrating a crystal structure of Li₄M₅O₁₂.
Fig. 3 is a view illustrating a volume invariable mechanism.
Fig. 4 is a schematic view of a bulk-type all solid cell.

### Description of Embodiments

The present inventors took notice on Li₄Ti₅O₁₂ having a spinel-type crystal structure and found a principle of suppressing volumic change accompanied by charge/discharge by theoretically investigating the charge/discharge mechanism thereof. Based on the finding, the present inventors reached an idea of increasing the energy density while suppressing the volumic change accompanied by charge/discharge in Li₄M₅O₁₂ having a spinel-type crystal structure. Investigations reaching the present finding are to be described below.

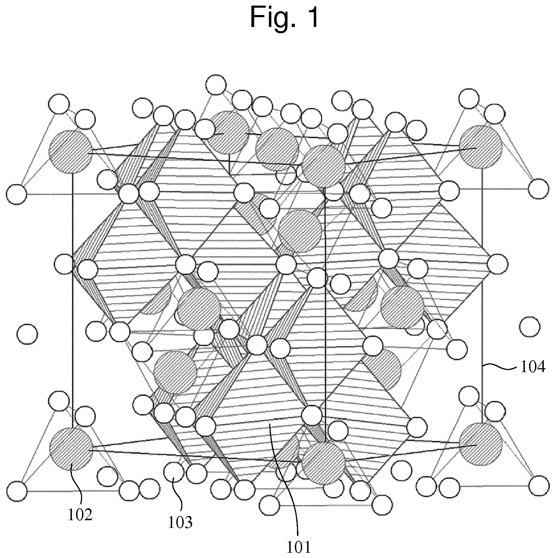

Fig. 1 illustrates a generally known crystal structure of a spinel-type Li₄Ti₅O₁₂ by X-ray diffraction experiment. Fig. 1 illustrates more generally as an Li₄M₅O₁₂ crystal structure. Oxygen 103 is coordinated by the number of six to titanium to form an octahedral TiO₆ structure 101. The octahedral structures 101 are present by the number of 16 in a unit cell, and 1/6 of which is occupied by lithium to form LiO₆. Oxygen 103 is coordinated by the number of four at the periphery of lithium 102 to form an LiO₄ tetrahedral structure.

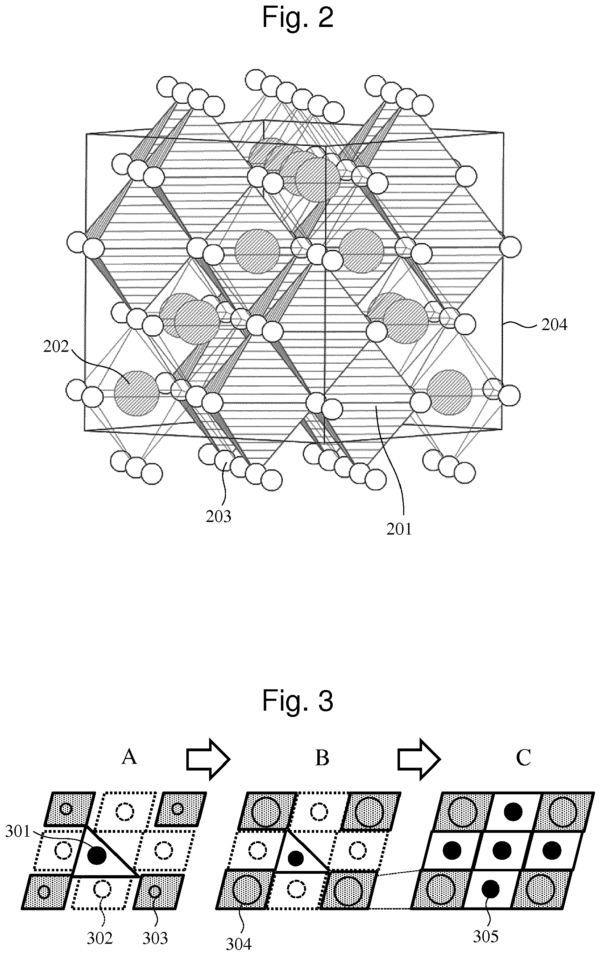

According to Non-patent Literature 1, Li₄Ti₅O₁₂ occludes lithium to form Li₇Ti₅O₁₂. The crystal structure of Li₇Ti₅O₁₂ has also been known generally, which is illustrated in Fig. 2. Fig. 2 illustrates the structure as a more general crystal structure of Li₄M₅O₁₂. It can be seen that the arrangement of the octahedral TiO₆ structure 201 is identical with that of Fig. 1. On the contrary, lithium 202 has oxygen coordinated by the number of six at the periphery thereof, to form an octahedral structure. The coordinate structure is different from the lithium coordinate structure in Li₄Ti₅O₁₂. Accordingly, it can be seen that the coordinate structure of lithium changes by intercalation of lithium in Li₄Ti₅O₁₂ to change from the tetrahedral structure to the octahedral structure. Change of the coordinate structure is caused by the change of the position of lithium. The change of the position is transition from an 8a site to a 16c site in crystallographic expression (Non-patent Literature 1).

Change of valence number of titanium due to lithium intercalation is also known. Valence changes from tetra valance to tri valence partially in titanium. This is because lithium tends to become a monovalent ion and an electron emitted from lithium reduces titanium. Along with reduction of titanium, ionic radius of titanium increases from 0.61 Å to 0.67 Å. Since the ionic radius increases, the bonding distance between titanium and oxygen increases and, further, the volume of the TiO₆ octahedron increases. When the present inventors examined the crystal structure, it has been found that while the volume of the octahedral structure 101 is 10.6 Å³, the volume of the octahedral structure 201 is partially 12.1 Å³ and it has been found that the volume increases by as much as 14%. Thus, it has been confirmed that titanium is reduced.

The present inventors considered that since the volume of the TiO₂ octahedron increases along with lithium intercalation, the volume of the unit cell should also be increased. However, it is known that the volumic change of this material along with lithium intercalation is as small as 0.2%. Then, the present inventors examined the change of the crystal structure along with lithium intercalation as illustrated in Fig. 3. In the drawing, "A" shows Li₄Ti₅O₁₂. In this case, lithium 301 at the tetrahedral position is present and the tetrahedral height is 2.75 Å. Further, titanium 303 has a tetra valence and a small radius. If titanium becomes trivalent along with lithium intercalation, the titanium radius increases as "B" in the drawing and the volume of TiO₈ octahedron increases. Then, the LiO₄ tetrahedron shrinks by being pushed from the surrounding to undergo large strain. Then, the present inventors considered that lithium 305 transmits to the octahedral position as "C" in the drawing to avoid increase in the strain. As a result of measuring the height of the LiO₆ octahedron in the crystal structure for confirming the concept, the height was 2.63 Å. Since the height is lower by about 0.12 Å than the height of the tetrahedron, it undergoes no large strain due to expansion of TiO₈ octahedron as "B". In view of the consideration described above, the present inventors considered that since the lithium transferred to the octahedral position, volumic expansion of the unit cell due to the volumic expansion of the TiO₆ octahedron was suppressed.

The present inventors further developed the concept and considered that electrode active materials of Li₄M₅O₁₂ having such mechanism in which M was other than Ti or Mn could be formed. That is, the present inventors considered that there should be a material having a positional change of lithium along with intercalation and deintercalation of lithium and giving no significant effect of the volumic change of M0₆ octahedron on the volumic of the unit cell.

However, increase or decrease of the ion radius due to oxidation/reduction of a transition metal M is strictly non-isotropic generally and volumic change of the unit cell cannot always be suppressed irrespective of the type of M. Accordingly, new active material Li₄M₅O₁₂ cannot be deduced easily based on the active materials known so far.

Further, the potential of the active material containing a transition metal M is generally different depending on the crystal structure. Accordingly, the potential of a new active material Li₄M₅O₁₂ not yet synthesized so far cannot be estimated easily.

In view of the above, the present inventors simulated active materials of a compositional formula Li₄M₅O₁₂ having a spinel structure by using various M based on a first principle calculation capable of theoretically calculating the structure and the potential of a material at high accuracy, and conducted the first principle calculation for the volumic change and the potential thereof. Specifically, calculation was performed by using Cr, Co, Zr which are a part of the transition metals. The results are shown in Table 1.

**[Table 1]**

| Relation between transition metal and volumic change and potential of Li₄M₅O₁₂ | | | |
|---|---|---|---|
| Transition metal | Cr | Co | Zr |
| Volume upon charge (Å³) | 432.4 | 418.5 | 561.3 |
| Volume upon discharge (Å³) | 433.6 | 422.7 | 558.5 |
| Difference (%) | 0.3 | 1.0 | 0.5 |
| Potential | 3.4 | 3.7 | 0.2 |

In a case where M = Cr, the volume in a state of Li₄Cr₅O₁₂ was 432.4 Å³, whereas the volume in a state of Li₇Cr₅O₁₂ was 433.6 Å³. The volumic change corresponds to 0.3% and volumic change hardly occurs in the same manner as Li₄Ti₅O₁₂. Accordingly, Li₄Cr₅O₁₂ has a property suitable as an aimed active material in view of the volumic change. Further, the potential of Li₄Cr₅O₁₂ was calculated as 3.4 V. Since the value is higher than 3.0 V, this can be an active material capable of attaining an energy-density higher than that of Li₄Mn₅O₁₂.

In a case where M = Co, the volume in a state of Li₄Co₅O₁₂ was 418.5 Å³, whereas the volume in a state of Li₇Co₅O₁₂ was 422.7 Å³. The volumic change corresponds to 1.0%, which is a sufficiently small volumic change. Accordingly, Li₄Co₅O₁₂ has a property sufficient as the aimed active material in view of the volumic change. Further, the potential was calculated as 3.7 V for Li₄Co₅O₁₂. Since the value is higher than the potential 3.0 V of Li₄Mn₅O₁, this can be an active material for attaining a high energy density.

In a case where M = Zr, the volume in a state of Li₄Zr₅O₁₂ was 561.3 Å³, whereas the volume for Li₇Zr₅O₁₂ was 558.5 Å³. The volumic change corresponds to 0.5% and since this is a sufficiently small amount of change, the material is suitable as an aimed active material. Further, since the potential of Li₄Zr₅O₁₂ is 0.2 V, when the material is used as a negative electrode, an energy density higher than that of Li₄Ti₅O₁₂ can be attained.

In view of the above, M = Cr, Co, or Zr was found as electrode active material of extremely less volumic change accompanied by charge/discharge and capable of attaining a high energy density.

An actual method of manufacturing the active materials is to be described. The manufacturing method of Li₄M₅O₁₂ (M = one of Cr, Co and Zr) is performed by usual firing of a powdery body. For example, the substance can be manufactured by a step of mixing, while pulverizing, a starting material containing a lithium source and a transition metal source mechanochemically and a step of firing the pulverized mixture.

As the lithium source, compounds forming lithium oxide by heating can be used and include, specifically, lithium hydroxide, lithium oxide, lithium acetate, basic lithium carbonate, lithium nitrate, lithium oxalate, lithium sulfate, lithium carbonate, and lithium chloride. Among them, lithium hydroxide and lithium carbonate are used particularly preferably.

As the cobalt source, compounds forming cobalt oxide by heating can be used. Specifically, they include cobalt oxide, cobalt hydroxide, cobalt sulfate, etc. Among them, cobalt oxide is particularly preferred. The chromium source can include chromium chloride, chromium oxide, chromium hydroxide, chromium sulfide, and chromium sulfate. The zirconium source includes, for example, zirconium oxide, zirconium chloride, and zirconium hydroxide.

Mechanochemical pulverization includes a wet mill method and a dry mill method that conduct pulverization while giving physical impact. Specifically, a ball mill, a vibration mill, attrition mill, a planetary mill, etc. can be used and use of the ball mill is preferred with a viewpoint of installation cost. By the pulverization treatment using the ball mill, particles of the lithium source and the transition metal source are pulverized and mixed, and the spinel-type solid electrolyte proposed by the present inventors can be manufactured. The time for the mixing treatment by mechanochemical pulverization is not particularly restricted and it is generally preferred within a range of 1 hour to 6 hours. In this embodiment, while description is to be made for a fixed electrolyte, a liquid electrolyte may also be used.

Firing time is not particularly restricted, but it is performed preferably within a range of one hour to 48 hours. The temperature for firing the mixed material is, for example, in a temperature region of 900 to 1500°C and preferably in a temperature range of 1000 to 1300°C. If the firing temperature is lower than 800°C, the firing time becomes longer. Further, if the firing temperature exceeds 1500°C, it is not preferred because the solid electrolyte is sintered strongly.

The firing atmosphere mainly comprises oxygen and may further contain one or more of materials selected from air, argon, nitrogen or the like. From an economical point of view, the firing atmosphere is the most preferably air. Further, the starting mixture may be fired in a state where an atmospheric gas is filled in a firing furnace, or may be fired in a gas stream of an atmospheric gas. The starting mixture is fired in a gas stream of an atmospheric gas preferably at a flow rate of 10 ml/min or more. With the steps described above, the positive electrode active material of this embodiment is obtained.

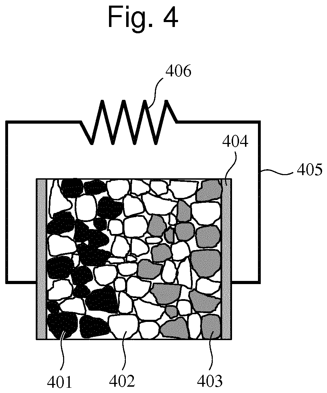

The process for producing an all solid lithium ion cell is performed preferably in accordance with a known method. The all solid lithium ion cell has, for example, as shown in Fig. 4, a positive electrode 401, a negative electrode 403, and an inorganic lithium solid electrolyte 402 present between the positive electrode 401 and the negative electrode 403 for conducting lithium ions, in which electrons are conducted by way of a collector plate 404 and a conductor wire 405 connected therewith, and they are connected to an external circuit (resistor) 406.

The positive electrode active material of a lithium ion cell in embodiments is preferably formed by mixing a positive electrode active material, a conduction aid, and a binder by using a solvent into a paste-like state, which is then coated and dried on the surface of a collector. The conduction aid may be any material so long as the material has electron conductivity and is less reactive with the positive electrode active material. Specifically, acetylene black, carbon, graphite, natural graphite, artificial graphite, needle coke, carbon nanotube, carbon nanohorn, graphene nanosheet, etc. can be used. As the binder, a polymeric material capable of binding the positive electrode active material and a conduction aid may be used preferably. Specifically, polytetrafluoroethylene, polyvinylidene fluoride, polyvinyl chloride, ethylene-propylene diene polymer, styrene butadiene rubber, acrylonitrile butadiene rubber, fluoro rubber, polyvinyl acetate, polymethyl methacrylate, polyethylene, nitrocellulose, etc. can be used. Any solvent can be used so long as the solvent can mix the active material and the binder in a highly dispersed state. An electrode proposed by the present inventors can also be manufactured by a method, for example, of coating a slurry obtained by mixing the mixed powder described above with an organic solvent (for example, N-methyl methylpyrrolidone, toluene, cyclohexane, dimethyl formamide, dimethyl acetamide, methyl ethyl ketone, methyl acetate, methyl acrylate, diethyl triamine, N-N-dimethyl aminopropylamine, ethylene oxide, tetrahydrofuran, etc.) on a metal substrate made of aluminum, nickel, stainless steel, copper and the like, or on a conductive polymer.

The negative electrode of the lithium ion cell proposed by the present inventors may be formed in the same manner as for the positive electrode active material by mixing the negative electrode active material, the conduction aid, and the binder using a solvent, coating and drying the material formed into a pasty state on the surface of the collector. The negative electrode active material contains, for example, lithium.

The shape of the secondary cell is not restricted to a coin type, and may also be configured as a cylindrical shape formed by winding of the electrode, for example, configured by a 18650 type. Further, it may be configured by stacking the electrode into a square shape.

### Embodiments

Typical embodiments are to be described. It is apparent that the invention proposed in the present specification is no way restricted by them. In the embodiments to be described later, the cell was manufactured and measured in a dry box under an argon atmosphere. For the cell, the first cycle was started from discharge and then charge/discharge were conducted.

### First Embodiment

A chromium oxide powder (CrO₂) and lithium hydroxide (LiOH) are filled at a ratio of Li:Cr = 4:5 in a wet pulverizer, purified water is added such that the slurry solid concentration is charged by 30% by weight, treated for one hour by using beads of 1.00 mmφ under the condition at a number of rotation of 2500 rpm. Purified water is added to them to prepare a liquid dispersion mixture for spray drying at a solid concentration of 20% by weight. The dispersion is heat treated for 4 hours in a firing atmosphere of 800°C by using an atmospheric furnace (argon gas stream). As a result, lithium-chromium composite oxide particles having a spinel structure in a composition of: Li:Cr = 4.77:5.13 are obtained.

Then, they are charged in a mixer, pulverized for 30 seconds and then classified for one minute by using an electromagnetic sieve shaker under the condition of mesh opening of 45 µm and an amplitude of 3.0 mm, fractions passing through the sieve are recovered to prepare lithium-manganese-calcium composite oxide particles for positive electrode.

When the X-ray diffraction pattern is examined for fired particles, their space group belongs to Fd-3m (No. 227). It can be recognized therefrom that Li₄Cr₅O₁₂ having a spinel structure is formed.

A coin-type lithium ion secondary cell as illustrated in Fig. 4 is assembled by using the present positive electrode active material. When a charge/discharge test is performed at a cut-off potential of 3.5 V or 2.0 V, a discharge capacity of 10 mAh/g at a discharge potential of 3.3 V can be confirmed. Since the discharge potential is higher than 3.0 V, it is confirmed that a necessary potential can be obtained.

### Second Embodiment

A liquid containing 200 g of lithium carbonate suspended in 600 mL of purified water is prepared, to which gaseous carbon dioxide is blown to adjust pH to 7.5. On the other hand, 110 g of cobalt chloride is dissolved in 300 mL of purified water to prepare a solution. The solution was dropped to prepare a carbonate containing lithium and cobalt (mixture of lithium carbonate and cobalt chloride). The carbonate is washed and filtered by using a saturated solution of lithium carbonate so that lithium carbonate is not eluted, and then dried in a hot blow at 100°C.

The carbonates was used as the starting material and heated from a room temperature to 490°C in an anhydrous air for 2 hours, kept at 490°C for 3 hours, and heated to 800°C over 4 hours. After keeping at that temperature for 24 hours, they are cooled spontaneously to obtain a lithium manganese composite oxide represented by the general formula Li₄₋ₓCo₄O₁₂ (where 0 < x < 0.2).

### Third Embodiment

A carbonate precursor is prepared by a reactive crystallization method using a zirconium sulfate as a starting material. Each of the elements is uniformly dispersed in a particle of the carbonate precursor. Lithium carbonate is mixed to the carbonate precursor and when the mixture is subsequently fired at 900°C for 4 hours, a positive electrode active material represented by Li₄Zr₅O₁₂ is obtained. When a discharge test is performed on the present active material, a discharge plateau appears at 0.2 V.

### List of Reference Signs

101: Octahedral structure having a transition metal or lithium at the center
102: Lithium
103: Oxygen
104: Unit cell boundary
201: Octahedral structure having a transition metal or lithium at the center
202: Lithium
203: Oxygen
204: Unit cell boundary
301: Lithium at tetrahedral position
302: Lithium vacant hole at octahedral position
303: Tetravalent titanium
304: Trivalent titanium
305: Lithium at octahedral position
401: Positive electrode
402: Solid electrolyte
403: Negative electrode
404: Collector plate
405: Conductor wire
406: External resistor (resistor)

## Claims

1. A lithium-containing transition metal oxide having a spinel-type crystal structure and having the chemical compositional formula Li₄M₅O₁₂ (M = Cr, Co, or Zr).

2. A lithium ion secondary cell having:
a positive electrode comprising a lithium-containing transition metal oxide having a spinel-type crystal structure and having the chemical compositional formula Li₄M₅O₁₂ (M = Cr or Co) ;
a negative electrode; and
a liquid or solid electrolyte having lithium ionic conductivity.

3. A lithium ion secondary cell having:
a positive electrode;
a negative electrode comprising a lithium-containing transition metal having a spinel-type crystal structure and having the chemical compositional formula Li₄Zr₅O₁₂; and
a liquid or solid electrolyte having lithium ionic conductivity.

4. The lithium ion secondary cell according to claim 3,
wherein the positive electrode comprises a lithium-containing transition metal oxide having a spinel-type crystal structure and having the chemical compositional formula Li₄Cr₅O₁₂.

5. The lithium ion secondary cell according to claim 3,
wherein the positive electrode comprises a lithium-containing transition metal oxide having a spinel-type crystal structure and having the chemical compositional formula Li₄Co₅O₁₂.
